# EUROPEAN PATENT APPLICATION

(11) **EP 0 994 574 A1**
(43) Date of publication of application: **19.04.2000**
(21) Application number: 98308425.2
(22) Date of filing: 15.10.1998
(51) Int. Cl.: H04B 3/46

(54) **Signal detector**

(71) Applicant: LUCENT TECHNOLOGIES INC., Murray Hill, New Jersey 07974-0636 (US)
(72) Inventor: Gooris, Dirk Anthony, 3752 WL Bunschoten (NL)
(74) Representative: Williams, David John

(57) **Abstract**

There is disclosed a device for testing for the presence of a transmit signal on a transmission line. The device has a connector for connection to the connector at an end of the transmission line. The device includes a filter tuned to the frequency of the transmit signal. A voltage detector at the output of the filter controls an indicator means responsive to detection of a voltage signal at a suitable level. The device is contained in a portable, pocket-sized housing and the indicator means is preferably an LED. Thus the transmission line can be tested merely by connected it to the input of the portable device and checking for illumination of the LED.

## Description

### Field of the Invention

The present invention relates to the detection of a signal presence on a transmission line.

### Background to the Invention

Communication lines often interconnect systems and remote devices. In systems were the interconnected units are relatively far apart, separate signal lines are typically provided for transmit and receive signals. In fault testing such systems a number of problems arise particularly associated with such connections that can be difficult, expensive, or time consuming to detect.

For instance, in testing or operation of such systems, faults may occur which are not obviously associated with the interconnections. If a system fault is detected, then time can be spent testing the circuitry of the system even when the fault may lie in the interconnections.

A system fault may arise due to the interconnections for a number of reasons. Where there are separate transmit and receive signal lines, the lines may have been connected incorrectly such that the transmission line carrying the transmit signal is connected to the output of the of the system. In addition, if the cables are relatively long the transmit signal may become weak due to the characteristics of the cable used, and the signal strength of the received signal may not be sufficient for correct operation of the system.

Dedicated monitoring equipment is available to monitor the signals on the transmission lines to check that the transmit signal is present at the correct signal level. However such dedicated monitoring equipment is expensive and heavy (and therefore not easily portable). Particularly where the system is at a remote site, provision of such monitoring equipment becomes expensive and time consuming. Time is also consumed by the necessary setting up of such equipment.

It is therefore an object of the present invention to provide equipment for checking the presence of a transmit signal at a suitable level for satisfactory operation which is cheap, portable and easy to use. To make such a device portable it must be both physically small and lightweight.

### Summary of the Invention

According to the present invention there is provided a device for detecting the presence of a signal of a predetermined frequency on a transmission line comprising: a filter having an input for connection to the transmission line and an output, the filter being tuned to the predetermined frequency; voltage detection means connected to the output of the filter and for generating a detection signal at its output on detection of a predetermined voltage level; and indicator means responsive to said detection signal.

There is thus provided a simple, portable pocket-sized device suitable for detecting presence of a transmit signal on a transmission line.

The voltage detection means may generate one of at least two detection signals at its output on detection of one of at least two predetermined voltage levels.

The indicator means may comprise an LED.

### Brief Description of the Drawings

Figure 1 illustrates the general interconnection of two remote devices by transmission lines;
Figure 2 is a block schematic of a test device according to the present invention; and
Figure 3 is an exemplary implementation of the test device of Figure 2.

### Description of Preferred Embodiment

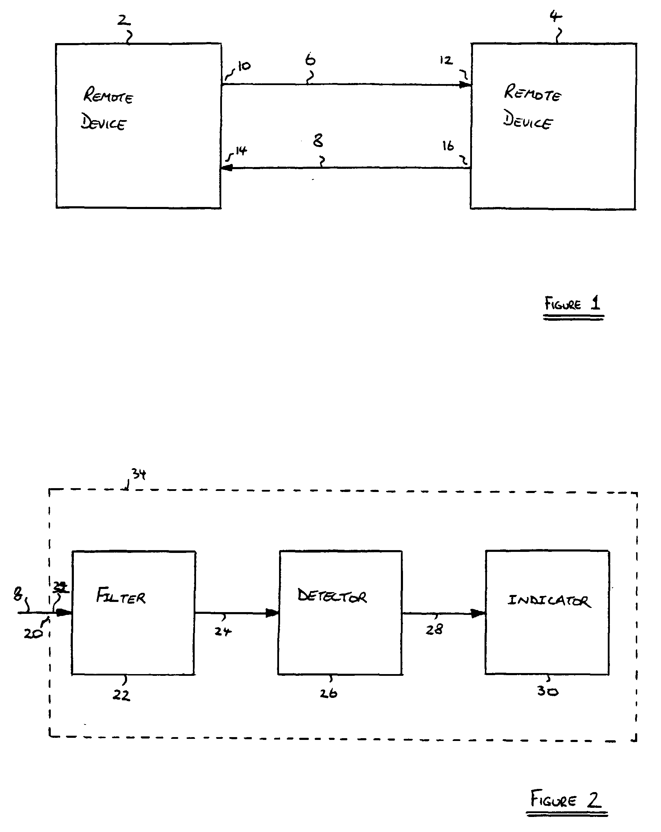

Referring to Figure 1 there is shown a simple block diagram of a system interconnection in which the present invention may be advantageously utilised. Figure 1 shows a first remote device 2 connected to a second remote device 4. The first remote device 2 transmits to the second remote device 4 via a transmission line 6. The signals to be transmitted from remote device 2 to remote device 4 are output at an output terminal 10 of remote device 2 which is connected to one end of transmission line 6. The other end of transmission line 6 is connected to an input terminal 12 of remote device 4. The signals to be transmitted from remote device 4 to remote device 2 are output at an output terminal 16 of remote device 4 which is connected to one end of transmission line 8. The other end of transmission line 8 is connected to an input terminal 14 of remote device 2.

It will be appreciated that the transmission lines 6 and 8 may interconnect any systems or peripheral devices, the nature of the devices being unimportant for the application of the present invention. In addition either of the remote devices 2 or 4 may receive or output additional transmission signals from or to additional transmission lines connected to either the other one of the remote devices 2 or 4 or any other remote device or system.

The transmission lines 6 and 8 will typically be long cables, and connected to the remote devices 2 or 4 by connectors.

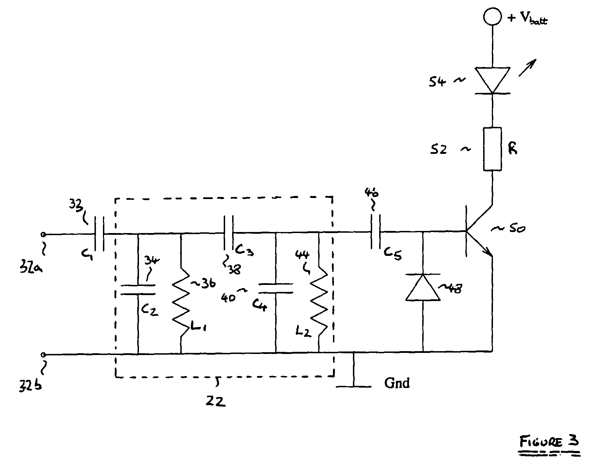

Referring now to Figure 2, there is shown a block diagram of the components of a device for testing the signal on a transmission line such as transmission lines 6 and 8. In order to test the transmission lines according to the present invention, the transmission line is disconnected from the remote device under test and connected to the signal detector 34 of Figure 2.

For the purposes of the following description, it will be assumed that the remote device 2 of Figure 1 is under test, or a fault has been identified in such system. To test the signal transmitted to the remote device 2 the transmission line 8, which is connected to the input terminal 14 of the remote device 2 and therefore for correct operation should carry a transmitted signal, is disconnected at terminal 14.

The test device according to the invention as shown in Figure 2 is fitted with a connector 20 which is compatible with the connectors 10, 14, 12 and 16 of remote devices 2 and 4. Thus when the transmission line 8 is disconnected from terminal 14, the end of the transmission line 8 can be connected to the terminal 20 of the test device, which connects the transmission line 8 to the input signal line 32 of the signal detector 34.

The signal detector 34 includes a filter 22, a detector 26 and an indicator 30. The filter 22 receives, on signal line 32, the signal on transmission line 8 connected at connector 32. The output of the filter on line 24 is connected to the input of the detector 26. The output of the detector 26 on line 28 is connected to the indicator 30.

The filter 22 is tuned to the frequency of the transmit signal which is transmitted on the transmission line 8. Thus the filter only outputs on line 24 those signals which are to be detected.

The detector detects a voltage level of the filtered signal level on line 24. The purpose of the signal detector 34 is to detect the presence of a transmitted signal at a required frequency and having a signal level that is sufficiently high for proper operation of the system. Thus the detector 26 will be configured to detect for the appropriate level of signal required for correct operation of the system.

When the detector detects the appropriate level of the signal on line 24, it outputs a signal on line 28 to the indicator 30. The indicator 30 then gives an indication of detection of a signal, e.g. by means of an indicator light or audible means.

Turning now to Figure 3, a detailed implementation of an exemplary embodiment of the signal detector of Figure 2 is illustrated.

As can be seen in Figure 3 the signal line 32 has a component 32a comprising the signal and a component 32b connected to ground. The signal line 32a is connected to one terminal of a capacitor 33 having a value C₁. The other terminal of the capacitor 33 is connected to the input of the filter 22. The capacitor 33 is a dc decoupling capacitor.

The input of the filter is connected to the first terminal of a capacitor 34 having a value C₂, the first terminal of a capacitor 38 having a value C₃, and the first terminal of an inductor 36 having a value L₁. The second terminals of the capacitor 34 and the inductor 36 are connected to ground. The second terminal of the capacitor 38 forms the output of the filter, and is also connected to the first terminal of a capacitor 40 having a value C₄ and to the first terminal of an inductor 44 having a value L₂. The second terminals of the capacitor 40 and the inductor 44 are connected to ground.

The output of the filter 22 is connected to a first terminal of a capacitor 46 having a value C₅. The second terminal of the capacitor C₅ is connected to the cathode of a diode 48 and the base of a bipolar transistor 50. The anode of the diode 48 and the emitter of the transistor 50 are connected to ground.

The collector of the transistor 50 is connected to one terminal of a load 52 having a value R. The second terminal of the load 52 is connected to the cathode of an LED 54, the other terminal of the LED 54 being connected to a battery supply voltage V_{batt}.

The diode 48 rectifies the filtered input signal output by the filter 22, and the rectified voltage of this signal charges the capacitor 46. Once the voltage stored in the capacitor exceeds the threshold voltage of the transistor, the transistor 50 will switch on and conduct current through the LED 54, which illuminates. Thus the diode 48, capacitor 46 and transistor 50 provide the detector 26.

For a 2048 kb/s signal on the transmission line the components of Figure 3 preferably have the following values:

| | | |
|---|---|---|
| C₁ = 1nF | C₅ = 1n5F | L₁ = 4□7H |
| C₂ = 1n5F | | L₂ = 4□7H |
| C₃ = 100nF | | |
| C₄ = 1n5F | | |

For a battery supply voltage of 3 volts the resistor value R may be 3ohm. For a battery supply voltage in the range 3 to 9 volts the resistor value R is typically chosen as 22 ohm.

The detector 26 may be able to detect one of a plurality of signal levels. In such an arrangement the output of the detector on line 28 may comprise a plurality of signals. The indicator may include means to indicate which one of a plurality of levels has been detected. For instance, the detector 26 may be capable of detecting two levels, and the indicator 30 may include two LEDs, wherein one LED is lit to indicate detection of a first level and two LEDs are lit to indicate detection of a second level. In the arrangement shown in Figure 3, the strength of illumination of the LED 54 will vary in dependence on the voltage level of the signal detected.

## Claims

1. A device for detecting the presence of a signal of a predetermined frequency on a transmission line comprising:
a filter having an input for connection to the transmission line and an output, the filter being tuned to the predetermined frequency;
voltage detection means connected to the output of the filter and for generating a detection signal at its output on detection of a predetermined voltage level; and
indicator means responsive to said detection signal.

2. The device of claim 1 wherein the voltage detection means generates one of at least two detection signals at its output on detection of one of at least two predetermined voltage levels.

3. The device of claim 1 or claim 2 wherein the indicator means comprises a light emitting diode.

4. The device of any one of claims 1 to 3 wherein the device is a hand-held device.
